# EUROPÄISCHE PATENTSCHRIFT

(11) **EP 2 863 068 B1**
(45) Veröffentlichungstag und Bekanntmachung des Hinweises auf die Patenterteilung: **29.11.2017**
(21) Anmeldenummer: 14185250.9
(22) Anmeldetag: 18.09.2014
(51) Int. Cl.: F15B 13/04, F15B 11/16

(54) **Ventilblock mit einer Ventilanordnung**
Valve block with a valve assembly
Bloc de soupapes avec système de vannes

(30) Priorität: 15.10.2013 DE 102013220750
(43) Veröffentlichungstag der Anmeldung: 22.04.2015
(73) Patentinhaber: ROBERT BOSCH GMBH, 70442 Stuttgart (DE)
(72) Erfinder: Knapper, Steffen, 71665 Vaihingen/Enz (DE)
(74) Vertreter: Maiß, Harald

(56) Entgegenhaltungen:
- DE-A1-102006 018 706
- FR-A1- 2 757 222
- US-A- 5 193 342

## Beschreibung

Die Erfindung geht aus von einer Ventilanordnung gemäß dem Oberbegriff des Anspruchs 1 und einem Ventilblock.

Eine derartige hydraulische Ventil- beziehungsweise Steueranordnung ist aus dem Stand der Technik bekannt und weist sogenannte "Load-Sensing"-Steuerventile mit einem Steuerkolben zur Richtungs- und Geschwindigkeitssteuerung auf. Im Steuerkolben ist eine Zumessblende ausgebildet. Einem jeweiligen Steuerventil ist hierbei eine Druckwaage zugeordnet, welche das Druckgefälle und somit auch den Volumenstrom an der jeweiligen Zumessblende lastunabhängig konstant hält. Hierfür wird der Druck stromauf und stromab der Zumessblende abgegriffen und an die Druckwaage gemeldet. Deren Kolben ist in einer üblicherweise offenen Neutralstellung durch eine Feder vorgespannt, die eine idealer Weise konstante Kraft ausübt. Zusätzlich zur Feder wirkt der stromab der Zumessblende abgegriffene Lastdruck in Öffnungsrichtung des Kolbens der Druckwaage. Dagegen wirkt in Schließrichtung des Kolbens der Druckwaage allein der stromauf der Zumessblende und stromab der Druckwaage abgegriffene Zulaufdruck.

Der Lastdruck wird von der jeweils auftretenden Last aufgebracht und kann vom Steuerventil nicht beeinflusst werden, dagegen reagiert der Kolben der Druckwaage auf Lastdruckänderungen und wird bei einer Lastdruckerhöhung in Öffnungsrichtung beziehungsweise bei einer Lastdruckabsenkung in Schließrichtung verschoben.

Der Zulaufdruck wird durch die Druckwaage geregelt und ist immer so hoch, dass die durch den Zulaufdruck in Schließrichtung wirkende Kraft im Gleichgewicht mit der in Öffnungsrichtung wirkenden Kraft der Feder und der des Lastdruckes ist. Dadurch ist die Kraft des Zulaufdrucks immer um den konstanten Betrag der Federkraft höher als die Kraft des Lastdruckes und es ergibt sich dadurch ein stets konstantes Druckgefälle und dem zur Folge ein konstanter Volumenstrom an der Zumessblende.

Bekannt ist außerdem, dass zum Schutz der verbraucherseitigen Maschinenausrüstung, der Zulaufdruck in seiner Höhe begrenzt werden kann. Dies erfolgt dadurch, dass ein in einer Lastmeldeleitung vorgesehenes Druckbegrenzungsventil den tatsächlichen Lastdruck verfälscht an die Druckwaage weitermeldet, in dem das Druckbegrenzungsventil an einem eingestellten Maximaldruck eine Verbindung zum Tank öffnet und so der gemeldete Lastdruck eine bestimmte Höhe nicht übersteigen kann. Um die abfließende Menge und die Baugröße des Druckbegrenzungsventils möglichst klein zu halten, ist üblicher Weise in der Lastmeldeleitung zwischen dem Lastabgriff und dem Druckbegrenzungsventil eine Blende angeordnet, durch die nur ein geringer Volumenstrom zum Tank strömen kann. Durch die Wirkungsweise dieser Druckbegrenzung kann die Volumenstromregelung zum Verbraucheranschluss des Steuerventils vollständig außer Funktion gesetzt werden. Der vom Steuerkolben eingestellte Volumenstrom wird zum Beispiel vollständig reduziert, wenn der Verbraucher gegen einen hohen Widerstand gefahren wird, der einen Zulaufdruck oberhalb des eingestellten Maximaldruckes erfordern würde. In diesem Fall wird der Zulaufdruck im Verbraucheranschluss den am Druckbegrenzungsventil eingestellten Wert nicht mehr als um die Federkraft überschreiten. Weiter ist bekannt, dass für mehrere Verbraucheranschlüsse eine Druckbegrenzung durch mehrere Druckbegrenzungsventile erreicht wird.

Eine derartige Lösung ist beispielsweise aus dem Datenblatt RD 64276, Ausgabe 08/2010 der Firma Rexroth bekannt. Darin ist für jedes Steuerventil eine Ventilscheibe vorgesehen, in der zusätzlich die Druckwaage und das Druckbegrenzungsventil angeordnet sind. Das Druckbegrenzungsventil ist hierbei für einen Verbraucher vorgesehen. Des Weiteren ist offenbart, dass für die unterschiedlichen Betätigungsrichtungen des Verbrauchers jeweils ein eigenes Druckbegrenzungsventil eingesetzt werden kann. Nachteilig bei dieser Lösung sind der hohe Bauraumbedarf und die vorrichtungstechnisch aufwendige Ausgestaltung der Ventilscheibe, die zu hohen Kosten führt.

In dem Datenblatt "Baureihe PVG 32, Proportionalventile" der Firma Sauer Danvoss wird vorgeschlagen ein Druckreduzierventil in einem Hauptölstrom anzuordnen. Hierfür ist das Druckreduzierventil vergleichsweise groß ausgestaltet und beispielsweise für einen Volumenstrom von 200 l/min ausgelegt. Das Druckreduzierventil wird dann auch durchströmt, wenn keine Druckreduzierung erfolgen soll, was zu hohen Druckverlusten führt. Des Weiteren ist der hohe Bauraumbedarf äußerst nachteilig.

Die FR 2 757 222 zeigt eine LS-Ventilanordnung mit zwei Gruppen von Steuerventilen für jeweilige Verbraucher, wobei die erste Gruppe ein zentrales Druckbegrenzungsventil für eine LS-Leitung hat, das stets auch den Druck einer LS-Leitung der zweiten Gruppe begrenzt.

Die US 5,193,342 zeigt eine LS-Ventilanordnung mit einer Gruppe von zwei Steuerventilen und mit jeweiligen Individualdruckwaagen. Die Gruppe hat ein Wechselventil zur Ermittlung des lasthöheren Verbrauchers, Ein Ausgangsdruck des Wechselventils und damit der höhere gemeldete Lastdruck der beiden Verbraucher wird von einem Druckbegrenzungsventil begrenzt.

Die DE 10 2006 018 706 A1 zeigt eine LS-Ventilanordnung mit einer Gruppe bzw. einem Block, der beispielhaft zwei Steuerventile für zwei Verbraucher hat, wobei die Gruppe bzw. der Block auch erweiterbar ist. Jedes Steuerventil hat eine jeweiligen Individualdruckwaage und ein jeweiliges Wechselventil, womit eine Wechselventilkaskade gebildet ist. Der Ausgangsdruck des in der Steuerdruckübertragungskette letzten Wechselventils wird von einem Druckbegrenzungsventil begrenzt.

Dem gegenüber liegt der Erfindung die Aufgabe zugrunde eine kostengünstige, kompakte und energieeffiziente Ventilanordnung zu schaffen, mit der ein Zulaufdruck für einen Teil von hydraulischen Verbrauchern begrenzt werden kann. Eine weitere Aufgabe der Erfindung ist es einen Ventilblock mit einer derartigen Ventilanordnung zu schaffen, der kostengünstig und kompakt ausgestaltet ist. Dabei soll der Zulaufdruck der pumpenferneren Verbraucher auf einen niedrigeren Druck als derjenige der pumpennäheren Verbraucher oder des pumpennäheren Verbrauchers begrenzt sein.

Die Aufgabe hinsichtlich der Ventilanordnung wird gelöst gemäß den Merkmalen des Anspruchs 1 und hinsichtlich des Ventilblocks mit den Merkmalen gemäß Anspruch 5.

Sonstige vorteilhafte Weiterbildungen der Erfindung sind Gegenstand weiterer Unteransprüche.

Erfindungsgemäß ist eine Ventilanordnung mit einer Mehrzahl von Steuerventilen vorgesehen. Diese haben jeweils einen Steuerkolben, über den eine Richtung und eine Geschwindigkeit eines Verbrauchers steuerbar sind. Mit dem Steuerkolben ist eine Zumessblende ausgebildet. Des Weiteren ist eine Druckwaage beziehungsweise Individualdruckwaage vorgesehen, die einem jeweiligen Steuerventil zugeordnet ist. Dieser wird ein stromauf und stromab der Zumessblende eines jeweiligen Steuerventils abgegriffene Druck gemeldet. Mit der Druckwaage ist ein Druckgefälle an der Zumessblende lastunabhängig im Wesentlichen konstant haltbar. Zum Abgreifen des Drucks stromab der Zumessblende ist jeweils ein Lastmeldeströmungspfad vorgesehen. Des Weiteren hat die Ventilanordnung ein Wechselventil. Dieses verbindet den jeweils druckhöchsten Lastmeldeströmungspfad der Steuerventile mit seinem Ausgangsanschluss. Somit ist das Wechselventil derart mit den Lastmeldeströmungspfaden fluidisch verbunden, dass sein Ausgangsanschluss mit dem druckhöchsten Lastmeldeströmungspfad in Druckmittelverbindung steht. Der Ausgangsanschluss ist zum Melden des höchsten Drucks der Lastmeldeströmungspfade mit der Verstellpumpe verbindbar. Dabei ist stromab des Ausgangsanschlusses des Wechselventils ein (insbesondere einstellbares) Druckbegrenzungsventil vorgesehen. Mit diesem kann jeweils der höchste Druck der Lastmeldeströmungspfade begrenzt werden.

Diese Lösung hat den Vorteil, dass für eine Mehrzahl von Steuerventilen auf einfache Weise ein gemeinsames Druckbegrenzungsventil vorgesehen ist, um den Zulaufdruck zu begrenzen. Hierdurch wird Bauraum gespart und der vorrichtungstechnische Aufwand sinkt, womit Kosten reduziert sind. Bei der erfindungsgemäßen Lösung wird der Eingangsanschluss des Wechselventils, an dem der druckhöchste Lastmeldeströmungspfad angeschlossen ist, mit dem Ausgangsanschluss verbunden, was vorteilhafter Weise dazu führt, dass durch das mit dem Ausgangsanschluss fluidisch verbundene Druckbegrenzungsventil den Druck an diesem Ausgangsanschluss begrenzt, womit auch der Druck an dem mit dem Ausgangsanschluss verbundenen Eingangsanschluss begrenzt ist und somit des druckhöchsten Lastmeldeströmungspfad.

Gemäß der Erfindung ist zumindest ein weiteres Steuerventil mit einem Steuerkolben als Zumessblende und einer dem Steuerventil zugeordneten Druckwaage vorgesehen, dessen Lastmeldeströmungspfad an einem ersten Eingangsanschluss eines weiteren zweiten Wechselventils angeschlossen ist. Ein zweiter Eingangsanschluss des Wechselventils ist dann mit einem Ausgangsanschluss des ersten Wechselventils verbunden. Der Ausgangsanschluss des zweiten Wechselventils wiederum kann zum Melden des höchsten Drucks mit der Verstellpumpe verbindbar sein. Das Druckbegrenzungsventil ist somit an den Strömungspfad zwischen dem ersten Wechselventil und dem zweiten Wechselventil angeschlossen. Das Druckbegrenzungsventil ist somit zwischen dem Ausgangsanschluss des pumpenfernen ersten Wechselventils und dem Eingangsanschluss des benachbarten pumpennäheren zweiten Wechselventils angeschossen. Ausgangsseitig kann das Druckbegrenzungsventil mit einem Ablaufkanal der Ventilanordnung verbunden sein. Hierbei ist vorteilhaft, dass der Zulaufdruck für hydraulische Verbraucher, die an die Steuerventile angeschlossen sind, die dem ersten (pumpenfernen) Wechselventil zugeordnet sind, begrenzt ist. Dagegen ist bei einem an das weitere Steuerventil (dem das zweite pumpennahe Wechselventil zugeordnet ist) angeschlossenen Verbraucher der Zulaufdruck nicht über das Druckbegrenzungsventil begrenzt. Somit wird der Zulaufdruck der pumpenferneren Verbraucher auf einen niedrigeren Druck als derjenige der pumpennäheren Verbraucher oder des pumpennäheren Verbrauchers begrenzt.

Die erfindungsgemäße Ventilanordnung wird vorzugsweise für einen landwirtschaftlich genutzten Traktor eingesetzt. Üblicherweise wird für einen Traktor eine Vielzahl unterschiedlicher Anbaugeräte verwendet, die ein hohes Alter aufweisen können. Derartige Anbaugeräte haben oft eine Druckfestigkeit, die unter 200 bar liegt. Erfindungsgemäß können derartige Anbaugeräte als pumpenferne Verbraucher mit den Steuerventilen eingesetzt werden, die dem ersten (pumpenfernen) Wechselventil zugeordnet sind. Somit sind als pumpenferne Verbraucher vorzugsweise konventionelle, wechselbare Anbaugeräte mit niedrigem maximalem Zulaufdruck vorgesehen. Pumpennähere Verbraucher (Lenkung, Frontlager, sonstige fest am Traktor angeordnete Verbraucher, neu entwickelte Anbaugeräte) können dann mit höherem Arbeitsdruck eingesetzt und somit bei gleichen Arbeitskräften entsprechend kleiner gebaut werden. Somit können insbesondere traktorinterne Funktionen, wie eben Lenkung, Hubwerk oder Fronthubwerk, um Bauraum um Kosten zu sparen, für erheblich höhere Drücke ausgelegt sein. Auch einzelne Anbaugeräte könnten als pumpenferne Verbraucher vorgesehen sein, beispielsweise ein separater Frontlader. Dieser kann dann ebenfalls mit einem höheren Zulaufdruck betrieben werden. Ein derartiger Frontlader würde dann durch den höheren Zulaufdruck vergleichsweise kleinere Hydrozylinder aufweisen, womit eine Übersicht des Traktors und des Frontladers erhöht ist. Als weiteren Vorteil von Systemen mit höherem Druck und kleineren Zylindern sind neben der Baugröße auch die geringeren Verluste in den Leitungen, da für die gleiche Leistung geringere Ölmengen übertragen werden müssen.

Vorzugsweise ist für jedes Steuerventil und somit für jeden Lastmeldeströmungspfad ein jeweiliges Wechselventil vorgesehen. Diese können in weiterer Ausgestaltung derart miteinander und den Lastmeldeströmungspfaden verbunden sein, dass das Wechselventil (erstes Wechselventil) - an dessen Ausgangsanschluss das Druckbegrenzungsventil angeschlossen ist - stromabwärts der Lastmeldeströmungspfade derjenigen Steuerventile vorgesehen ist, bei denen der Zulaufdruck begrenzt werden soll.

Die Wechselventile können somit eine Wechselventilkaskade bilden.

Mit Vorteil kann fluidisch parallel zum Druckbegrenzungsventil eine Drossel (drain relief) vorgesehen sein. Diese ist fluidisch dann mit dem Strömungspfad zwischen dem ersten und zweiten Wechselventil und einem Ablauf verbunden.

Vorzugsweise wird der Druck stromab einer jeweiligen Zumessblende über eine Drossel abgegriffen. Hierdurch strömt ein vergleichsweise geringer Volumenstrom über das Druckbegrenzungsventil, womit dieses wiederum vergleichsweise klein ausgestaltet werden kann.

Mit Vorteil hat die Druckwaage einen in einer Schiebebohrung angeordneten Kolben. Dieser kann in seiner offenen Neutralstellung durch eine Federkraft einer Feder vorgespannt sein. Auf seiner ersten Stirnseite kann zusätzlich zur Federkraft der stromab der Zumessblende abgegriffenen Druck in Öffnungsrichtung des Kolbens wirken. Entgegengesetzt auf seine zweite Stirnseite und somit in Schließrichtung kann der stromauf der Zumessblende und stromab der Druckwaage abgegriffenen Druck wirken. Der Kolben begrenzt vorzugsweise mit seiner ersten Stirnseite einen insbesondere abgeschlossenen Druckraum in der Schieberbohrung. Dieser ist über einen sich ausgehend von der ersten Stirnseite sich etwa in Längsrichtung oder axial erstreckenden ersten Kanalabschnitt und einen sich radial darin anschließenden zweiten Kanalabschnitt mit dem Lastmeldeströmungspfad verbunden. In einem der Kanalabschnitte, vorzugsweise im radialen zweiten Kanalabschnitt, ist die Drossel ausgebildet. Die Drossel erfüllt somit eine Doppelfunktion. Zum Einen sorgt sie dafür, dass nur ein geringer Druckmittelvolumenstrom über den Lastmeldeströmungspfad zum Ablauf abströmt und zum Anderen dafür, dass eine Bewegung des Kolbens der Druckwaage gedämpft ist. Bei dem Druckraum kann es sich um den Federraum der Feder handeln.

Erfindungsgemäß hat ein Ventilblock eine erfindungsgemäße Ventilanordnung. Der Ventilblock weist eine Mehrzahl von Steuerventilscheiben auf. In diesen ist dann jeweils ein Steuerventil mit der zugeordneten Druckwaage ausgebildet. Für das Druckbegrenzungsventil kann eine zusätzliche Druckbegrenzungsventilscheibe vorgesehen sein oder es ist einfach in einer der Steuerventilscheiben angeordnet. Die Ventilanordnung ist durch als Ventilblock äußerst einfach erweiterbar.

In weiterer Ausgestaltung der Erfindung ist eine Vielzahl von Steuerventilscheiben bei dem Ventilblock vorgesehen. Die Druckbegrenzungsventilscheibe kann dann als Zwischenplatte zwischen zumindest zwei einen ersten Blockteil bildenden Steuerventilscheiben und zumindest einer einen zweiten Blockteil bildenden Steuerventilscheibe angeordnet sein. Mit dem Druckbegrenzungsventil ist dann der höchste Druck der Lastmeldeströmungspfade des ersten Blockteils begrenzbar. Bei dem ersten Blockteil handelt es sich somit um ein Niederdruckblockteil und bei dem zweiten Blockteil um ein Hochdruckblockteil. Die Blockteile können einfach durch Entfernen und Hinzufügen von Steuerventilscheibe vermindert oder erweitert werden. Des Weiteren kann die Druckbegrenzungsventilscheibe einfach versetzt werden. Womit eine oder mehrere Steuerventilscheiben auf einfache Weise dem ersten oder zweiten Blockteil zugeordnet werden können.

Der erste Blockteil soll für einen begrenzten Zulaufdruck (reduziertem Arbeitsdruck) vorgesehen sein und somit insbesondere für Anbaugeräte an einem Traktor dienen. Der zweite Blockteil soll dagegen für einen maximalen möglichen Zulaufdruck (maximalen Arbeitsdruck) eingesetzt werden und somit insbesondere für Hubwerksfunktionen am Traktor dienen. Mit dem ersten Blockteil sollen demnach Verbraucher betrieben werden, deren Zulaufdruck unterhalb des maximal möglichen Systemdrucks liegen soll. Mit dem zweiten Blockteil sind dann Verbraucher mit dem vollen Zulaufdruck versorgbar.

Vorzugsweise ist der zweite Blockteil oder die Druckbegrenzungsventilscheibe mit einem Pumpenteil verbunden. Der Pumpenteil kann hierbei eine Verstellpumpe mit einem Druckregler aufweisen. Zusätzlich kann im Pumpenteil eine weitere Hydropumpe als Steuerölpumpe zur Steuerölversorgung einer hydraulischen Steuerung der Steuerventile vorgesehen sein. Alternativ ist denkbar, das System über eine geeignete Eingangsplatte mit einer Konstantpumpe zu betreiben.

Der erste Blockteil kann insbesondere auf seiner von der Druckbegrenzungsventilscheibe weg gewandten Seite mit einem Abschlussteil verbunden sein.

In weiterer Ausgestaltung der Erfindung ist bei einer jeweiligen Steuerventilscheibe ein jeweiliges Wechselventil angeordnet, das mit seinem ersten Eingangsanschluss mit dem Lastmeldeströmungspfad des Steuerventils verbunden ist. Ein jeweiliges Wechselventil kann dann mit seinem zweiten Eingangsanschluss mit einer ersten Anschlussseite der Steuerventilscheibe und mit seinem Ausgangsanschluss mit einer zweiten (von der ersten weg gewandten) Anschlussseite der Steuerventilscheibe verbunden sein. Von benachbarten Wechselventilen der Steuerscheiben sind somit der Ausgangsanschluss und der zweite Eingangsanschluss miteinander verbindbar. Die Wechselventile bilden dann auf einfache Weise eine Wechselventilkaskade.

Die Druckbegrenzungsventilscheibe kann einen sich zwischen seinen Anschlussseiten erstreckenden Durchgangskanal aufweisen, der den Ausgangsanschluss des Wechselventils der benachbarten Steuerventilscheibe des ersten Blockteils mit der benachbarten Steuerventilscheibe des zweiten Blockteils oder dem Pumpenteil fluidisch verbindet. Am Durchgangskanal ist dann das Druckbegrenzungsventil angeschlossen.

Vorrichtungstechnisch einfach können die Steuerventilscheiben gleich ausgebildet sein.

In weiterer Ausgestaltung der Erfindung haben die Steuerventilscheiben und die Druckbegrenzungsventilscheibe einen gemeinsamen Zulaufkanal, einen gemeinsamen Ablaufkanal, einen gemeinsamen Steuerölzulaufkanal und einen gemeinsamen Steuerölablaufkanal.

Zum Anschluss eines Verbrauchers kann eine jeweilige Steuerventilscheibe jeweils zwei Arbeitsanschlüsse aufweisen, die mit dem Steuerventil über einen Vorbeziehungsweise Rücklaufkanal verbunden sind.

Im Folgenden werden bevorzugte Ausführungsformen der Erfindung anhand von Zeichnungen näher erläutert. Es zeigen:
Figur 1 in einem hydraulischen Schaltplan die erfindungsgemäße Ventilanordnung gemäß einer Ausführungsform,
Figur 2 in einem hydraulischen Schaltplan ein Pumpenteil für die Ventilanordnung aus Figur 1,
Figur 3 in einem hydraulischen Schaltplan einen Ausschnitt der Ventilanordnung gemäß einem zweiten Ausführungsbeispiel,
Figur 4 in einer schematischen Darstellung einen hydraulischen Verbraucher für die Ventilanordnung aus Figur 1 und
Figur 5 in einem Längsschnitt eine Ventilscheibe für die Ventilanordnung aus Figur 1.

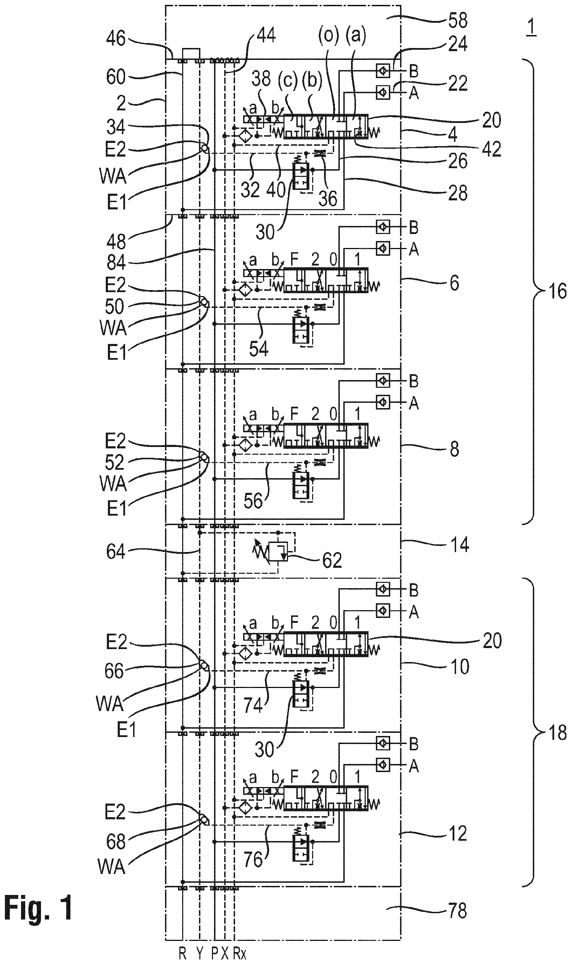

Gemäß Figur 1 ist die erfindungsgemäße Ventilanordnung 1 in Form eines Ventilblocks 2 dargestellt. Dieser hat mehrere Steuerventilscheiben 10 bis 12 und eine Druckbegrenzungsventilscheibe 14. Die Steuerventilscheiben 4 bis 8 bilden hierbei einen ersten Blockteil 16 und die Steuerventilscheiben 10 und 12 einen zweiten Blockteil 18. An eine jeweilige Steuerventilscheibe 4 bis 12 kann über Arbeitsanschlüsse A und B ein Verbraucher angeschlossen werden. Zum Steuern einer Geschwindigkeit und Richtung eines jeweiligen Verbrauchers hat eine jeweilige Steuerventilscheibe 4 bis 12 ein Steuerventil 20, wobei der Übersichtlichkeit halber nur das Steuerventil 20 der Steuerventilscheibe 4 mit einem Bezugszeichen versehen ist.

Da die Steuerventilscheiben 4 bis 12 identisch ausgebildet sind, wird der Aufbau einer jeweiligen Steuerventilscheibe 4 bis 12 anhand der Steuerventilscheibe 4 näher erläutert. Der Arbeitsanschluss A der Steuerventilscheibe 4 ist über einen ersten Kanal 22 mit dem Steuerventil 20 und der Arbeitsanschluss B ist über einen zweiten Kanal 24 mit dem Steuerventil 20 verbunden. Ein jeweiliger Kanal 22 beziehungsweise 24 kann hierbei als Vor- beziehungsweise Rücklaufkanal eingesetzt werden, je nachdem, in welche Richtung der Verbraucher bewegt ist. Des Weiteren ist an das Steuerventil 20 ein Zulaufkanal 26 und ein Ablaufkanal 28 angeschlossen. In den Zulaufkanal 26 ist eine Druckwaage 30 angeordnet. Über einen mit dem Steuerventil 20 verbundenen Lastmeldeströmungspfad in Form eines Lastmeldekanals 32 wird der Lastdruck abgegriffen. Der Lastmeldekanal 32 ist dann zum Einen mit einem ersten Eingangsanschluss E1 eines Wechselventils 34 und zum Anderen mit der Druckwaage 30 verbunden. Ein Kolben der Druckwaage 30 ist dann mit dem Lastdruck In Richtung ihrer offenen Neutralstellung beaufschlagt, in die auch die Federkraft einer Ventilfeder auf den Kolben wirkt. In Schließrichtung wird der Kolben der Druckwaage 30 vom Druck, der zwischen der Druckwaage 30 und dem Steuerventil 20 abgegriffen ist, beaufschlagt. Der Abgriff des Lastdrucks über den Lastmeldekanal 32 erfolgt über eine Drossel 36.

Über ein Pilotventil 38 ist ein Ventilschieber der Steuerventils 20 betätigbar. In seiner in der Figur 1 gezeigten Neutralstellung 0 ist der Ventilschieber des Steuerventils 20 über eine Federanordnung federzentriert. In der Neutralstellung 0 ist der Lastmeldekanal 32 mit einem Steuerdruckmittelablaufkanal verbunden, während die anderen Kanäle 22, 24, 26 und 28 voneinander getrennt sind. Wird der Ventilschieber ausgehend von seiner Neutralstellung 0 in Richtung von Schaltstellungen a verfahren, so ist der Steuerdruckmittelablaufkanal 40 vom Lastmeldekanal 32 getrennt. Der Lastmeldekanal 32 ist dann stromab einer Zumessblende 42 des Steuerventils 20 mit dem zweiten Kanal 24 in Druckmittelverbindung. Der erste Kanal 22 ist fluidisch mit dem Ablaufkanal 28 verbunden. Wird der Ventilschieber des Steuerventils 20 ausgehend von der Neutralstellung 0 entgegengesetzt von den Schaltstellungen a in Richtung von Schaltstellungen b verschoben, so ist ebenfalls der Steuerdruckmittelablaufkanal 40 vom Lastmeldekanal 32 getrennt. Der Zulaufkanal 26 ist dann weiter mit dem ersten Kanal 22 verbunden und der Lastmeldekanal 32 ist stromab der Zumessblende 42 mit dem ersten Kanal 22 in Druckmittelverbindung. Der zweite Kanal 24 ist mit dem Ablaufkanal 28 verbunden. Wird der Ventilschieber des Steuerventils 20 ausgehend von den Schaltstellungen b weiter von seiner Neutralstellung 0 weg verschoben, so gelangt dieser in Sicherheitsstellungen c, in denen die Kanäle 22 und 24 gemeinsam mit dem Ablaufkanal 28 in Druckmittelverbindung stehen. Entsprechend der Neutralstellung 0 sind hierbei wieder der Lastmeldekanal 32 und der Steuerdruckmittelablaufkanal 40 miteinander verbunden.

Das Pilotventil 38 wird über einen Steuerdruckmittelzulaufkanal 44 mit Steuerdruckmittel versorgt und kann über den Steuerdruckmittelablaufkanal 40 Steuerdruckmittel abgeben.

Ein zweiter Eingangsanschluss E2 des Wechselventils 34 ist mit einer Anschlussseite 46 der Steuerventilscheibe 4 verbunden. Ein Ausgangsanschluss WA des Wechselventils 34 ist dagegen mit einer von der Anschlussseite 46 wegweisenden Anschlussseite 48 der Steuerventilscheibe 4 verbunden. In Druckmittelströmungsrichtung weg vom Ausgangsanschluss WA des Wechselventils 34 ist ein Wechselventil 50 der benachbarten Steuerventilscheibe 6 vorgesehen. Somit sind der Ausgangsanschluss WA des Wechselventils 34 und ein zweiter Eingangsanschluss E2 des Wechselventils 50 fluidisch verbunden. Das Gleiche gilt für eine Wechselventil 52 der vorliegenden Steuerventilscheibe 8, das stromab der Wechselventile 34 und 50 angeordnet ist. Dessen zweiter Eingangsanschluss E2 ist dann wiederum mit dem Ausgangsanschluss WA des Wechselventils 50 verbunden. Am ersten Eingangsanschluss E1 des Wechselventils 50 ist dann ein Lastmeldekanal 54 der Steuerventilscheibe 6 und am ersten Eingangsanschluss E1 des Wechselventils 52 der Steuerventilscheibe 8 ein Lastmeldekanal 56 angeschlossen. Die Wechselventile 34, 50 und 52 bilden somit eine Wechselventilkaskade, die derart ausgestaltet ist, dass am Ausgangsanschluss WA des in Strömungsrichtung als letztes angeordneten Wechselventils 52 des ersten Blockteils 16 mit demjenigen Lastmeldekanal 32, 54 beziehungsweise 56 verbunden ist, der den höchsten Druck aufweist. Der Eingangsanschluss E2 des Wechselventils 34 der pumpenfernsten Steuerventilscheibe 4 des ersten Blockteils 16 ist über ein plattenförmiges Abschlussteil 58 mit einem Ablaufkanal 60 verbunden. Die Steuerventilsscheibe 8, die das am weitesten stromab liegende Wechselventil 52 des ersten Blockteils 16 aufweist (beziehungsweise die pumpennächste Steuerventilscheibe 8 des ersten Blockteils 16) ist benachbart zur Druckbegrenzungsventilscheibe 14 angeordnet.

Die Druckbegrenzungsventilscheibe 14 weist ein Druckbegrenzungsventil 62 auf. Dieses ist an einen Durchgangskanal 64 angeschlossen, der wiederum mit dem Ausgangsanschluss WA des am weitesten stromab liegenden Wechselventils 52 beziehungsweise des pumpennächsten Wechselventils des ersten Blockteils 16 verbunden ist. Ausgangsseitig ist das Druckbegrenzungsventil 62 mit dem Ablaufkanal 60 in Druckmittelverbindung. Somit wird mit dem Druckbegrenzungsventil 62 der Druck stromab des Ausgangsanschlusses WA des Wechselventils 52 begrenzt. Da dieser Ausgangsanschluss WA mit dem druckhöchsten Lastmeldekanal 32, 54 beziehungsweise 56 verbunden ist, wird durch das Druckbegrenzungsventil 62 der Druck in dem druckhöchsten Lastmeldekanal 32, 54 beziehungsweise 56 begrenzt. Übersteigt der Zulaufdruck für einen der an die Steuerventilscheiben 4, 6 beziehungsweise 8 angeschlossenen Verbraucher den maximalen von dem Druckbegrenzungsventil 62 vorgegebenen Druck, so führt dies nicht zu einem weiteren Ansteigen des von dem Lastmeldekanal 32, 54 beziehungsweise 56 gemeldeten Drucks, sondern es wird höchstens der maximale von dem Druckbegrenzungsventils 62 vorgegebene Druck an die Druckwaage 30 der Steuerventilscheibe 4, 6 beziehungsweise 8 gemeldet. Der tatsächliche Lastdruck wird dann verfälscht an die jeweilige Druckwaage 30 weitergegeben. Im Unterschied zum eingangs erläuterten Stand der Technik ist es gemäß der erfindungsgemäßen Ventilanordnung 1 nicht mehr notwendig jede Steuerventilscheibe 4 bis 8 mit einem eigenen Druckbegrenzungsventil vorzusehen, sondern es genügt ein einziges Druckbegrenzungsventil 62, um die Volumenstromregelung der Steuerventile 20 der Steuerventilscheiben 4, 6 beziehungsweise 8 vollständig außer Funktion zu setzen.

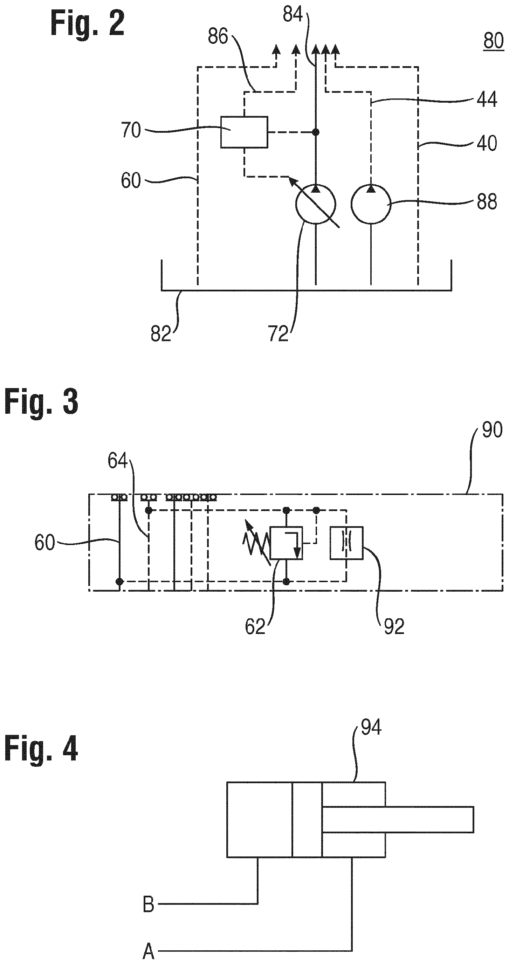

Die Druckbegrenzungsventilscheibe 14 trennt den ersten Blockteil 16 vom zweiten Blockteil 18, womit im Anschluss an die Druckbegrenzungsventilscheibe 14 die Steuerventilscheibe 10 vorgesehen ist. Ein zweiter Eingangsanschluss E2 eines Steuerventils 66 der Steuerventilscheibe 10 ist dann mit dem Durchgangskanal 64 und somit mit dem Ausgangsanschluss WA des Wechselventils 52 verbunden. Ein Ausgangsanschluss WA des Wechselventils 66 ist dann wiederum mit dem zweiten Eingangsanschluss E2 eines Wechselventils 68 der Steuerventilscheibe 12 in Druckmittelverbindung. Dessen Ausgangsanschluss WA ist gemäß Figur 2 mit einem Druckregler 70 einer Verstellpumpe 72 verbunden. Da die Wechselventile 66 und 68 der (pumpennahen) Steuerventilscheiben 10 beziehungsweise 12 des zweiten Blockteils 18 stromab des Wechselventils 52 liegen, wird dessen über einen Lastmeldekanal 74 beziehungsweise 76 abgegriffene Lastdruck nicht durch das Druckbegrenzungsventil 62 begrenzt. Ein Zulaufdruck für an die Steuerventilscheiben 10 oder 12 angeschlossenen Verbrauchern ist somit im Unterschied zu den Steuerventilscheiben 4 bis 8 in seiner Höhe nicht begrenzt.

Als Verbraucher, die an den ersten Blockteil 16 angeschlossen sind, sind beispielsweise wechselbare Anbaugeräte für einen Traktor vorgesehen, die mit einem maximalen Zulaufdruck betrieben werden sollen, der unterhalb eines maximalen Systemdrucks liegt. Als Verbraucher für den zweiten Blockteil 18 können beispielsweise fest am Traktor angeordnete Verbraucher vorgesehen sein, wie eine Lenkung, Frontlader oder sonstige Hubwerke. Sollen mehrere Verbraucher an den ersten Blockteil 16 angeschlossen werden, so werden einfach weitere Steuerventilscheiben in diesem angeordnet. Sind weniger Verbraucher vorgesehen, so werden einfach Steuerventilscheiben entfernt. Das Gleiche gilt für den zweiten Blockteil 18. Auch ist denkbar einfach die Druckbegrenzungsventilscheibe 14 zu versetzen und diese beispielsweise zwischen der Steuerventilscheibe 4 und 6, oder 6 und 8, oder 10 und 12 vorzusehen. Auch ist denkbar, die Druckbegrenzungsventilscheibe 14 stromab aller Steuerventilscheiben 4 bis 12 anzuordnen, womit dann nur ein Blockteil vorhanden ist, bei dem dann der Zulaufdruck für alle Verbraucher begrenzt ist.

Gemäß Figur 1 ist an die Steuerventilscheibe 12 ein scheibenförmiges Zwischenstück 78 angeschlossen, an das wiederum ein Pumpenteil 80, siehe Figur 2, angeschlossen ist, das gemäß der Figur 2 nur schematisch dargestellt ist. In dem Pumpenteil 80 setzt sich der Ablaufkanal 60 weiter fort und mündet in einem Tank 82. Der Tank 82 kann hierbei außerhalb des Pumpenteils 80 liegen. Die Verstellpumpe 72 fördert Druckmittel in einen gemeinsamen Zulaufkanal 84, der sich durch alle Steuerventilscheiben 4 bis 12, durch die Druckbegrenzungsventilscheibe 14 und durch das Zwischenstück 78 erstreckt. Des Weiteren ist ein Lastmeldekanal 86 im Pumpenteil 80 vorgesehen, der mit dem Druckregler 70 verbunden ist und in Druckmittelverbindung mit dem Ausgangsanschluss WA des Wechselventils 68 der am weitesten stromab liegenden (pumpennächsten) Steuerventilscheibe 12 angeschlossen ist. Des Weiteren hat der Pumpenteil 80 eine Konstantpumpe 88, die an den Steuerdruckmittelzulaufkanal 44 angeschlossen ist. Des Weiteren wird der Pumpteil 80 vom Steuerdruckmittelablaufkanal 40 durchsetzt, der im Tank 82 mündet.

Gemäß Figur 3 ist eine alternative Ausführungsform der Ventilanordnung 1 aus Figur 1 dargestellt. Im Unterschied zu Figur 1 ist eine Druckbegrenzungsventilscheibe 90 vorgesehen, die fluidisch parallel zum Druckbegrenzungsventil 62 eine Drossel 92 aufweist. Die Drossel 92 ist somit zwischen dem Durchgangskanal 64 und dem Ablaufkanal 60 angeordnet.

Figur 4 stellt beispielhaft einen Verbraucher 94 in Form eines Hydrozylinders dar. Dieser ist als Differenzialzylinder ausgebildet und hat Arbeitsanschlüsse A und B, mit denen er an die Arbeitsanschlüsse A und B der Steuerventilscheiben 4 bis 12 anschließbar ist.

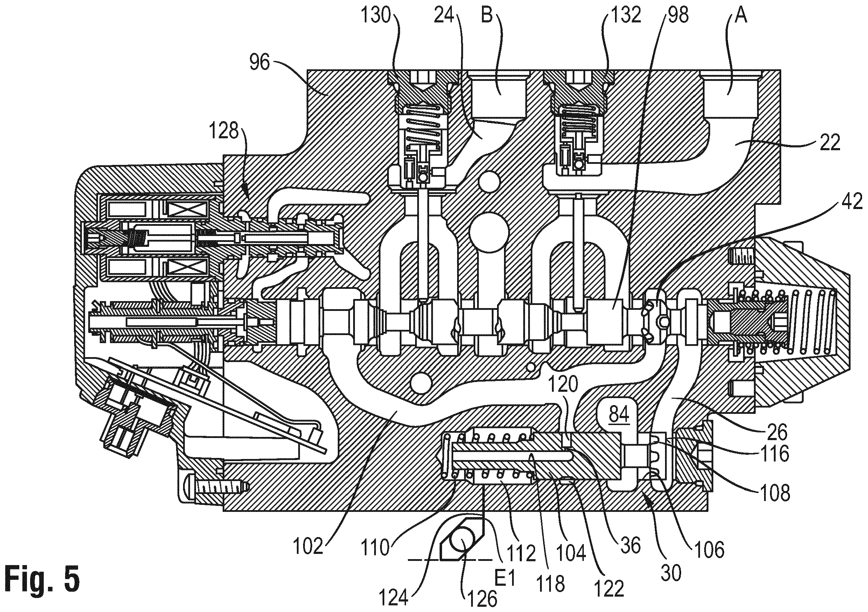

Ein Grundaufbau der Steuerventilscheiben ist hinlänglich aus dem Stand der Technik bekannt und beispielsweise in der Druckschrift DE 10 2009 034 616 A1 erläutert. Bei der gemäß Figur 5 aufgezeigten Steuerventilscheibe 96 wird aus diesem Grund nur das für die Erfindung Wesentliche beschrieben ist und im Übrigen auf den Stand der Technik verwiesen wird.

Gemäß Figur 5 hat eine Steuerventilscheibe 96 einen Ventilschieber beziehungsweise Steuerkolben 98 mit der Zumessblende 42. Es ist der Zulaufkanal 84 ersichtlich, der über die Druckwaage 30 mit dem Zulaufkanal 26 verbindbar ist. Des Weiteren sind die Kanäle 22 und 24 mit den Arbeitsanschlüssen A und B ersichtlich. Der Zulaufdruck ist stromab der Zumessblende 42 über den Lastmeldekanal 102 abgegriffen. Die Drossel 36 des Lastmeldekanals 102 ist hierbei in einem Kolben 104 der Druckwaage 30 vorgesehen. Der Kolben 104 ist in einer Schieberbohrung 106 gleitend geführt. Über eine Steuerkante 108 wird mit dem Kolben 104 die Druckmittelverbindung zwischen dem Zulaufkanal 84 und dem Zulaufkanal 26 gesteuert. Hierfür wird der Kolben 104 in Richtung seiner Öffnungsstellungen von der Federkraft einer Feder 110 beaufschlagt. Diese ist in einem Federraum 112 angeordnet, der mit dem Lastmeldekanal 102 über die Drossel 36 verbunden ist. Eine erste Stirnseite 114 des Kolbens 104 begrenzt den Federraum 112, womit diese vom Druckmittel im Federraum 112 in Öffnungsrichtung des Kolbens 104 beaufschlagt ist. Eine von der Stirnseite 114 weg gewandte zweite Stirnseite 116 ist wiederum vom Druckmittel im Zulaufkanal 26 in Schließrichtung des Kolbens 104 beaufschlagt. Zur Verbindung des Federraums 112 mit dem Lastmeldekanal 102 ist in dem Kolben 104 ausgehend von der Stirnseite 114 eine axiale Sacklochbohrung 118 eingebracht, die einen ersten Kanalabschnitt bildet. In dessen Bodenbereich schließt sich eine Radialbohrung 120 an, die einen zweiten Kanalabschnitt bildet, in der die Drossel 36 ausgebildet ist. Die Radialbohrung 120 mündet in einer in die Schieberbohrung 106 eingebrachten Ringnut 122, die mit dem Lastmeldekanal 102 verbunden ist. Der Federraum 112 wird somit über die Radialbohrung 120 und die Sacklochbohrung 118 mit dem Lastmeldekanal 102 fluidisch verbunden. Durch die Drossel 36 ist des Weiteren eine Dämpfung des Kolbens 104 in Richtung seiner Schließstellungen ermöglicht. Ausgehend vom Federraum 112 erstreckt sich ein Lastmeldekanal 124 zum ersten Eingangsanschluss E1 eines Wechselventils 126. Des Weiteren sind in der Figur 5 ein Pilotventil 128 und Sperrventile 130, 132 vorgesehen.

Offenbart ist ein Ventilblock mit einer Vielzahl von Steuerventilscheiben, die einen ersten und zweiten Blockteil bilden. Ein Zulaufdruck für die Steuerventilscheiben des ersten Blockteils ist hierbei über ein gemeinsames Druckbegrenzungsventil begrenzt. Dieses ist hierbei derart angeordnet, dass ein jeweiliger über die Steuerventilscheiben abgegriffener Lastdruck einen bestimmten Wert nicht überschreitet. Eine Begrenzung des Zulaufdrucks der Steuerventilscheiben des zweiten Blockteils ist dagegen nicht vorgesehen.

### Bezugszeichenliste

- 1: Ventilanordnung
- 2: Ventilblock
- 4: Steuerventilscheibe
- 6: Steuerventilscheibe
- 8: Steuerventilscheibe
- 10: Steuerventilscheibe
- 12: Steuerventilscheibe
- 14: Druckbegrenzungsventilscheibe
- 16: erster Blockteil
- 18: zweiter Blockteil
- 20: Steuerventil
- 22: erster Kanal
- 24: zweiter Kanal
- 26: Zulaufkanal
- 28: Ablaufkanal
- 30: Druckwaage
- 32: Lastmeldekanal
- 34: Wechselventil
- 36: Drossel
- 38: Pilotventil
- 40: Steuerdruckmittelablaufkanal
- 42: Zumessblende
- 44: Steuerdruckmittelzulaufkanal
- 46: Anschlussseite
- 48: Anschlussseite
- 50: Wechselventil
- 52: Wechselventil
- 54: Lastmeldekanal
- 56: Lastmeldekanal
- 58: Abschlussteil
- 60: Ablaufkanal
- 62: Druckbegrenzungsventil
- 64: Durchgangskanal
- 66: Wechselventil
- 68: Wechselventil
- 70: Druckregler
- 72: Verstellpumpe
- 74: Lastmeldekanal
- 76: Lastmeldekanal
- 78: Zwischenstück
- 80: Pumpenteil
- 82: Tank
- 84: Zulaufkanal
- 86: Lastmeldekanal
- 88: Konstantpumpe
- 90: Druckbegrenzungsventilscheibe
- 92: Drossel
- 94: Verbraucher
- 96: Steuerventilscheibe
- 98: Steuerkolben
- 102: Lastmeldekanal
- 104: Kolben
- 106: Schieberbohrung
- 108: Steuerkante
- 110: Feder
- 112: Federraum
- 114: erste Stirnseite
- 116: zweite Stirnseite
- 118: Sacklochbohrung
- 120: Radialbohrung
- 122: Ringnut
- 124: Lastmeldekanal
- 126: Wechselventil
- 128: Pilotventil
- 130: Sperrventil
- 132: Sperrventil
- A, B: Arbeitsanschluss
- E1: erster Eingangsanschluss
- E2: zweiter Eingangsanschluss
- WA: Ausgangsanschluss

## Patentansprüche

1. Ventilanordnung mit einer Mehrzahl von Steuerventilen (20), die jeweils einen Steuerkolben (98) aufweisen, über den eine Richtung und Geschwindigkeit eines Verbrauchers (94) steuerbar sind, und über den eine Zumessblende (42) ausgebildet ist, wobei ein Druck stromauf und stromab der Zumessblende (42) eines jeweiligen Steuerventils (20) abgegriffen und an eine dem jeweiligen Steuerventil (20) zugeordnete Druckwaage (30) gemeldet ist, über die ein Druckgefälle an der Zumessblende (42) lastunabhängig konstant haltbar ist, wobei der Druck stromab der Zumessblende (42) über einen Lastmeldeströmungspfad (32, 54, 56) abgegriffen ist, und wobei ein erstes Wechselventil (52) vorgesehen ist, das den jeweils druckhöchsten Lastmeldeströmungspfad (32, 54, 56) mit einem Ausgangsanschluss (WA) des ersten Wechselventils (52) verbindet, und wobei stromab des Ausgangsanschlusses (WA) des ersten Wechselventils (52) ein Druckbegrenzungsventil (62) zur Druckbegrenzung des höchsten Drucks der Lastmeldeströmungspfade (32, 54, 56) vorgesehen ist, wobei zumindest ein weiteres Steuerventil (20) mit einem Steuerkolben (98) als Zumessblende (42) und einer dem Steuerventil (20) zugeordneten Druckwaage (30) vorgesehen ist, dessen Lastmeldeströmungspfad (74) an einen ersten Eingangsanschluss (E1) eines weiteren zweiten Wechselventils (66) angeschlossen ist, **dadurch gekennzeichnet, dass** ein zweiter Eingangsanschluss (E2) des zweiten Wechselventils (66) mit dem Ausgangsanschluss (WA) des ersten Wechselventils (52) verbunden ist, und wobei der Ausgangsanschluss (WA) des zweiten Wechselventils (66) zum Melden des höchsten Drucks mit einer Verstellpumpe (72) verbindbar ist, und wobei das Druckbegrenzungsventil (62) an einen Strömungspfad (64) zwischen dem ersten Wechselventil (52) und dem zweiten Wechselventil (66) angeschlossen ist.

2. Ventilanordnung nach Anspruch 1, wobei fluidisch parallel zum Druckbegrenzungsventil (62) eine Drossel (92) vorgesehen ist.

3. Ventilanordnung nach einem der vorhergehenden Ansprüche, wobei der Druck stromab einer jeweiligen Zumessblende (42) über eine Drossel (36) abgegriffen ist.

4. Ventilanordnung nach Anspruch 3, wobei die Druckwaage (30) einen in einer Schieberbohrung (106) angeordneten Kolben (104) hat, der in seiner offenen Neutralstellung durch eine Federkraft einer Feder (110) vorgespannt ist, wobei auf seine erste Stirnseite (114) zusätzlich zur Federkraft der stromab der Zumessblende (42) abgegriffene Druck in Öffnungsrichtung auf den Kolben (104) der Druckwaage (30) wirkt, und wobei entgegengesetzt auf seine zweite Stirnseite (116) der stromauf der Zumessblende (42) und stromab der Druckwaage (30) abgegriffene Druck wirkt, wobei der Kolben (104) mit seiner ersten Stirnseite (114) einen Druckraum (112) in der Schieberbohrung (106) begrenzt, der über einen sich ausgehend von der ersten Stirnseite (114) sich etwa in Längsrichtung erstreckenden ersten Kanalabschnitt (118) und einen sich radial daran anschließenden zweiten Kanalabschnitt (120) mit dem Lastmeldeströmungspfad (102) verbunden ist, wobei in einem der Kanalabschnitte die Drossel (36) ausgebildet ist.

5. Ventilblock mit einer Ventilanordnung gemäß einem der vorhergehenden Ansprüche, wobei eine Mehrzahl von Steuerventilscheiben (4 bis 8) vorgesehen sind, die jeweils das Steuerventil (20) mit der zugeordneten Druckwaage (30) aufweisen, und wobei eine Druckbegrenzungsventilscheibe (14; 90) mit dem Druckbegrenzungsventil (62) vorgesehen ist, die mit den Steuerventilscheiben (4 bis 8) verbunden ist.

6. Ventilblock nach Anspruch 5, wobei eine Vielzahl von Steuerventilscheiben (4 bis 12) vorgesehen sind, und die Druckbegrenzungsventilscheibe (14; 90) zwischen zumindest zwei einen ersten Blockteil (16) bildenden Steuerventilscheiben (4, 6, 8) und zumindest einer einen zweiten Blockteil (18) bildenden Steuerventilscheibe (10, 12) angeordnet ist, und wobei durch das Druckbegrenzungsventil (62) der höchste Druck der Lastmeldeströmungspfade (32, 54, 56) des ersten Blockteils (16) begrenzbar ist.

7. Ventilblock nach Anspruch 6, wobei der zweite Blockteil (18) oder die Druckbegrenzungsventilscheibe (14; 90) mit einem Pumpenteil (80) verbunden sind.

8. Ventilblock nach Anspruch 6 oder 7, wobei der erste Blockteil (16) mit einem Abschlussteil (58) verbunden ist.

9. Ventilblock nach einem der Ansprüche 5 bis 8, wobei in einer jeweiligen Steuerventilscheibe (4 bis 12) ein Wechselventil (34, 50, 52, 66, 68) angeordnet ist, das mit seinem ersten Eingangsanschluss (E1) mit dem Lastmeldeströmungspfad (32, 54, 56, 74, 76) des Steuerventils (20), mit seinem zweiten Eingangsanschluss (E2) mit einer ersten Anschlussseite (46) der Steuerventilscheibe (4 bis 12) und mit seinem Ausgangsanschluss (WA) mit einer zweiten Anschlussseite (48) der Steuerventilscheibe (4 bis 12) verbunden ist.

10. Ventilblock nach einem der Ansprüche 6 bis 9, wobei die Druckbegrenzungsventilscheibe (14; 90) einen sich zwischen seinen Anschlussseiten erstreckenden Durchgangskanal (64) hat, der den Ausgangsanschluss (WA) des Wechselventils (52) der äußeren Steuerventilscheibe (8) des ersten Blockteils (16) mit der benachbarten Steuerventilscheibe (10) des zweiten Blockteils (18) oder dem Pumpenteil (80) fluidisch verbindet.

11. Ventilblock nach einem der Ansprüche 5 bis 10, wobei die Steuerventilscheiben (4 bis 12) gleich ausgebildet sind.

12. Ventilblock nach einem der Ansprüche 5 bis 11, wobei die Steuerventilscheiben (4 bis 12) und die Druckbegrenzungsventilscheibe (14; 90) einen gemeinsamen Zulaufkanal (84), einen gemeinsamen Ablaufkanal (60), einen gemeinsamen Steuerdruckmittelzulaufkanal (44) und einen gemeinsamen Steuerdruckmittelablaufkanal (40) ausbilden.

13. Ventilblock nach einem der Ansprüche 5 bis 12, wobei die Steuerventilscheiben (4 bis 12) jeweils zwei Arbeitsanschlüsse (A, B) aufweisen, die mit dem Steuerventil (20) über einen Vor- und Rücklaufkanal (22, 24) verbunden sind.

## Claims

1. Valve assembly having a plurality of control valves (20), which each comprise a control piston (98), which serves to control a direction and speed of a consumer (94) and to form a metering orifice (42), a pressure being registered upstream and downstream of the metering orifice (42) of a particular control valve (20) and signaled to a pressure compensator (30), which is assigned to the particular control valve (20) and which serves to keep a pressure gradient at the metering orifice (42) constant irrespective of the load, the pressure downstream of the metering orifice (42) being registered by way of a load-sensing flow path (32, 54, 56), and a first shuttle valve (52) being provided, which connects that load-sensing flow path (32, 54, 56) having the highest pressure at any given time to an outlet connection (WA) of the first shuttle valve (52), and a pressure-limiting valve (62) being provided downstream of the outlet connection (WA) of the first shuttle valve (52) for limiting the highest pressure of the load-sensing flow paths(32, 54, 56), wherein at least one further control valve (20) is provided with a control piston (98) as metering orifice (42) and with a pressure compensator (30) assigned to the control valve (20), the load-sensing flow path (74) of which is connected to a first inlet connection (E1) of a further, second shuttle valve (66), **characterized in that** a second inlet connection (E2) of the second shuttle valve (66) is connected to the outlet connection (WA) of the first shuttle valve (52), and wherein the outlet connection (WA) of the second shuttle valve (66) can be connected to a variable-capacity pump (72) for sensing the highest pressure, and wherein the pressure-limiting valve (62) is connected to a flow path (64) between the first shuttle valve (52) and the second shuffle valve (66).

2. Valve assembly according to Claim 1, wherein a restrictor (92) is provided in a fluid connection parallel to the pressure-limiting valve (62).

3. Valve assembly according to either of the preceding claims, wherein the pressure downstream of a particular metering orifice (42) is registered by way of a restrictor (36).

4. Valve assembly according to Claim 3, wherein the pressure compensator (30) comprises a piston (104), which is arranged in a spool bore (106) and which is biased in its open, neutral position by a spring force of a spring (110), wherein on its first end face (114), in addition to the spring force, the pressure registered downstream of the metering orifice (42) acts in the opening direction on the piston (104) of the pressure compensator (30), and wherein in opposition to this the pressure registered upstream of the metering orifice (42) and downstream of the pressure compensator (30) acts on its second end face (116), wherein the piston (104) with its first end face (114) defines a pressure chamber (112) in the spool bore (106), this chamber being connected to the load-sensing flow path (102) by way of a first port section (118), proceeding from the first end face (114) and extending approximately in a longitudinal direction, and a second radially adjoining port section (120), the restrictor (36) being formed in one of the port sections.

5. Valve block having a valve assembly according to one of the preceding claims, wherein a plurality of control valve disks (4 to 8) is provided, these each comprising the control valve (20) with the associated pressure compensator (30), and wherein a pressure-limiting valve disk (14;90) disk is provided with the pressure-limiting valve (62), the disk being connected to the control valve disks (4 to 8).

6. Valve block according to Claim 5, wherein a plurality of control valve disks (4 to 12) is provided, and the pressure-limiting valve disk (14;90) is arranged between at least two control valve disks (4, 6, 8) forming a first block part (16) and at least one control valve disk (10, 12) forming a second block part (18), and wherein the highest pressure of the load-sensing flow paths (32, 54, 56) of the first block part (16) can be limited by the pressure-limiting valve (62) .

7. Valve block according to Claim 6, wherein the second block part (18) or the pressure-limiting valve disk (14;90) are connected to a pump part (80).

8. Valve block according to Claim 6 or 7, wherein the first block part (16) is connected to an end piece (58) .

9. Valve block according to one of Claims 5 to 8, wherein a shuttle valve (34, 50, 52, 66, 68), which is connected by its first inlet connection (E1) to the load-sensing flow path (32, 54, 56, 74, 76) of the control valve (20), by its second inlet connection (E2) to a first connection side (46) of the control valve disk (4 to 12) and by its outlet connection (WA) to a second connection side (48) of the control valve disk (4 to 12), is arranged in a particular control valve disk (4 to 12).

10. Valve block according to one of Claims 6 to 9, wherein the pressure-limiting valve disk (14;90) comprises a passage (64), which extends between its connection sides and which affords a fluid connection between the outlet connection (WA) of the shuttle valve (52) of the outer control valve disk (8) of the first block part (16) and the adjacent control valve disk (10) of the second block part (18) or the pump part (80) .

11. Valve block according to one of Claims 5 to 10, wherein the control valve disks (4 to 12) are of identical design.

12. Valve block according to one of Claims 5 to 11, wherein the control valve disks (4 to 12) and the pressure-limiting valve disk (14;90) form a common inlet port (84), a common outlet port (60), a common control fluid inlet port (44) and a common control fluid outlet port (40).

13. Valve block according to one of Claims 5 to 12, wherein the control valve disks (4 to 12) each comprise two working connections (A, B), which are connected to the control valve (20) via a feed port (22) and a return port (24).

## Revendications

1. Agencement de soupapes comprenant une pluralité de soupapes de commande (20) qui présentent chacune un piston de commande (98) par le biais duquel un sens et une vitesse d'un consommateur (94) peuvent être commandés, et par le biais duquel un diaphragme de dosage (42) est réalisé, une pression en amont et en aval du diaphragme de dosage (42) de chaque soupape de commande (20) étant mesurée et étant communiquée à une balance manométrique (30) associée à la soupape de commande respective (20), par le biais duquel un gradient de pression au niveau du diaphragme de dosage (42) peut être maintenu constant indépendamment de la charge, la pression en aval du diaphragme de dosage (42) étant mesurée par le biais d'un circuit de signalisation de charge (32, 54, 56), et une première soupape à deux voies (52) étant prévue, laquelle relie le circuit de signalisation de charge respectif ayant la plus haute pression (32, 54, 56) à un raccord de sortie (WA) de la première soupape à deux voies (52) et, en aval du raccord de sortie (WA) de la première soupape à deux voies (52) étant prévue une soupape de limitation de pression (62) pour la limitation de pression de la pression maximale du circuit de signalisation de charge (32, 54, 56), au moins une soupape de commande supplémentaire (20) étant pourvue d'un piston de commande (98) en tant que diaphragme de dosage (42) et d'une balance manométrique (30) associée à la soupape de commande (20), dont le circuit de signalisation de charge (74) est raccordé à un premier raccord d'entrée (E1) d'une deuxième soupape à deux voies supplémentaire (66),
**caractérisé en ce**
**qu'**un deuxième raccord d'entrée (E2) de la deuxième soupape à deux voies (66) est raccordé au raccord de sortie (WA) de la première soupape à deux voies (52), et
le raccord de sortie (WA) de la deuxième soupape à deux voies (66) peut être raccordé à une pompe de réglage (72) pour communiquer la pression maximale, et la soupape de limitation de pression (62) étant raccordée au niveau d'un trajet d'écoulement (64) entre la première soupape à deux voies (52) et la deuxième soupape à deux voies (66) .

2. Agencement de soupapes selon la revendication 1, dans lequel un étranglement (92) est prévu fluidiquement parallèlement à la soupape de limitation de pression (62).

3. Agencement de soupapes selon l'une quelconque des revendications précédentes, dans lequel la pression est mesurée en aval d'un diaphragme de dosage respectif (42) par le biais d'un étranglement (36).

4. Agencement de soupapes selon la revendication 3, dans lequel la balance manométrique (30) présente un piston (104) disposé dans un alésage coulissant (106), qui, dans sa position neutre ouverte, est précontraint par une force de ressort d'un ressort (110), la pression mesurée en aval du diaphragme de dosage (42) agissant sur son premier côté frontal (114), en plus de la force de ressort, dans la direction d'ouverture sur le piston (104) de la balance manométrique (30), et la pression mesurée en amont du diaphragme de dosage (42) et en aval de la balance manométrique (30) agissant à l'opposé sur son deuxième côté frontal (116), le piston (104) limitant avec son premier côté frontal (114) un espace de pression (112) dans l'alésage coulissant (106), lequel espace de pression est raccordé par le biais d'une première portion de canal (118) s'étendant approximativement dans la direction longitudinale à partir du premier côté frontal (114) et d'une deuxième portion de canal (120) s'y raccordant radialement, au circuit de signalisation de charge (102), l'étranglement (36) étant réalisé dans l'une des portions de canal.

5. Bloc de soupapes comprenant un agencement de soupapes selon l'une quelconque des revendications précédentes, dans lequel une pluralité de disques de soupapes de commande (4 à 8) sont prévus, lesquels présentent à chaque fois la soupape de commande (20) avec la balance manométrique associée (30), et un disque de soupape de limitation de pression (14 ; 90) étant pourvu de la soupape de limitation de pression (62), lequel est raccordé aux disques de soupapes de commande (4 à 8).

6. Bloc de soupapes selon la revendication 5, dans lequel une pluralité de disques de soupapes de commande (4 à 12) sont prévus, et le disque de soupape de limitation de pression (14 ; 90) est disposé entre au moins deux disques de soupapes de commande (4, 6, 8) formant une première partie de bloc (16) et au moins un disque de soupape de commande (10, 12) formant une deuxième partie de bloc (18), et la pression maximale des circuit de signalisation de charge (32, 54, 56) de la première partie de bloc (16) pouvant être limitée par la soupape de limitation de pression (62).

7. Bloc de soupapes selon la revendication 6, dans lequel la deuxième partie de bloc (18) ou le disque de soupape de limitation de pression (14 ; 90) sont raccordés à une partie de pompe (80).

8. Bloc de soupapes selon la revendication 6 ou 7, dans lequel la première partie de bloc (16) est raccordée à une partie de terminaison (58).

9. Bloc de soupapes selon l'une quelconque des revendications 5 à 8, dans lequel, dans un disque de soupape de commande respectif (4 à 12), est disposée une soupape à deux voies (34, 50, 52, 66, 68), laquelle est raccordée par son premier raccord d'entrée (E1) au circuit de signalisation de charge (32, 54, 56, 74, 76) de la soupape de commande (20), par son deuxième raccord d'entrée (E2) à un premier côté de raccordement (46) du disque de soupape de commande (4 à 12) et par son raccord de sortie (WA) à un deuxième côté de raccordement (48) du disque de soupape de commande (4 à 12).

10. Bloc de soupapes selon l'une quelconque des revendications 6 à 9, dans lequel le disque de soupape de limitation de pression (14 ; 90) présente un canal de passage (64) s'étendant entre ses côtés de raccordement, lequel relie fluidiquement le raccord de sortie (WA) de la soupape à deux voies (52) du disque de soupape de commande extérieur (8) de la première partie de bloc (16) au disque de soupape de commande adjacent (10) de la deuxième partie de bloc (18) ou à la partie de pompe (80).

11. Bloc de soupapes selon l'une quelconque des revendications 5 à 10, dans lequel les disques de soupapes de commande (4 à 12) sont réalisés de manière identique.

12. Bloc de soupapes selon l'une quelconque des revendications 5 à 11, dans lequel les disques de soupapes de commande (4 à 12) et le disque de soupape de limitation de pression (14 ; 90) constituent un canal d'alimentation commun (84), un canal d'écoulement commun (60), un canal d'alimentation en fluide sous pression de commande commun (44) et un canal d'écoulement de fluide sous pression de commande commun (40).

13. Bloc de soupapes selon l'une quelconque des revendications 5 à 12, dans lequel les disques de soupapes de commande (4 à 12) présentent à chaque fois deux raccords de travail (A, B) qui sont raccordés à la soupape de commande (20) par le biais d'un canal aller et d'un canal retour (22, 24) .
